# EUROPÄISCHE PATENTSCHRIFT

(11) **EP 0 616 067 B1**
(45) Veröffentlichungstag und Bekanntmachung des Hinweises auf die Patenterteilung: **16.07.1997**
(21) Anmeldenummer: 94102586.8
(22) Anmeldetag: 21.02.1994
(51) Int. Cl.: D06C 3/02

(54) **Spannkettenanordnung**
Tenterdevice
Rame

(30) Priorität: 08.03.1993 DE 4307231
(43) Veröffentlichungstag der Anmeldung: 21.09.1994
(73) Patentinhaber: Brückner Trockentechnik GmbH & Co. KG, D-71229 Leonberg (DE)
(72) Erfinder: Gresens, Harry, D-71726 Benningen am Neckar (DE)
(74) Vertreter: Tetzner, Volkmar, Dr.-Ing. Dr. jur.

(56) Entgegenhaltungen:
- DE-A- 3 926 475
- DE-U- 1 946 707
- GB-A- 1 085 603
- GB-A- 2 027 082
- US-A- 4 459 124

## Beschreibung

Die Erfindung betrifft eine Spannkettenanordnung für eine Spannmaschine zur Wärmebehandlung breitgeführter Warenbahnen in wenigstens einer Behandlungsebene, entsprechend dem Oberbegriff des Anspruches 1.

Spannkettenanordnungen dieser vorausgesetzten Art sind aus der Praxis in verschiedenen Versionen hinreichend bekannt. Sie werden in Spannmaschinen verwendet, um dort Warenbahnen, insbesondere Textil- und Kunststoffbahnen in breitgeführtem Zustand durch eine oder mehrere Behandlungszonen in einer Behandlungsebene oder in mehreren übereinanderliegenden Behandlungsebenen hindurchzuführen, wobei diese Warenbahnen in ihrer Breitenrichtung einer bestimmten Querspannung ausgesetzt werden. Zu diesem Zweck werden Warenbahnen an ihren Längsrändern von Halteelementen der beiden mit Abstand nebeneinander endlos umlaufenden Spannketten festgehalten und in Längsrichtung durch die Spannmaschine bzw. deren Behandlungszonen transportiert. Über die Länge des Warenbahntransports durch die Spannmaschine ergeben sich vor allem aufgrund von Schußkrumpfungen Änderungen in der Warenbahnbreite und somit im Abstand der beiden nebeneinander umlaufenden Spannketten, so daß diese Spannketten gewisse Abknickungen um einen entsprechenden Knickwinkel in Querrichtung, d. h. horizontal zu ihrer Längsrichtung aufnehmen müssen. Die hierzu erforderliche Knickbeweglichkeit läßt sich bei in etwa horizontalen Ebenen umlaufenden Spannketten im allgemeinen verhältnismäßig problemlos erreichen, während sie bei in etwa vertikalen Ebenen, d. h. um horizontale Kettenradachsen endlos umlaufenden Spannketten Schwierigkeiten bereitet, da diese Spannketten im Bereich entsprechender Knickpunkte nur ganz gering in Querrichtung abgebogen werden können.

Bei den aus der Praxis bekannten Spannkettenanordnungen hat man bei der einen Ausführungsart der vertikal umlaufenden Spannketten die in den Kettengelenken als horizontale Gelenkachsen vorgesehenen Gelenkbolzen im Verhältnis zu zugehörigen Gelenkbuchsen relativ klein derart ausgeführt, daß ein verhältnismäßig großes Spiel zwischen den Durchmessern der Gelenkbolzen und der Gelenkbuchsen vorhanden ist. Darüber hinaus sind die Gelenkbolzen im Bereich ihrer beiden Laufflächenenden leicht konisch verjüngt, um dadurch eine gewisse Kippbeweglichkeit in den zugehörigen Gelenkbuchsen zu ermöglichen. Derartige Spannketten lassen sich im Bereich ihrer Kettengelenke nur um etwa 1° abknicken, wodurch die Schußkrumpf-Beweglichkeit der Spannketten im Bereich der Knickpunkte auf diesen relativ kleinen Knickwinkel eingeschränkt ist.

Es ist auch bereits vorgeschlagen worden (z. B. DE-U-19 46 707), eine größere horizontale Auslenk- bzw. Knickbeweglichkeit der Spannketten dadurch zu erreichen, daß bei der Ausführung der Spannketten als Rollenketten jedes Kettenglied zwei Rollen mit je einer horizontalen Gelenkachse aufweist, wobei mittig zwischen je zwei Kettengliedern ein senkrecht ausgerichteter Gelenkbolzen angeordnet ist, der eine horizontale Auslenkung der Kette ermöglicht und von zwei geschränkten Zwischengliedern getragen wird, die um die horizontalen Gelenkachsen schwenkbar sind. Abgesehen von der bei der praktischen Ausführung relativ schweren und klobigen Kettenausführung, bedingt diese bekannte Konstruktion, daß die Halteelemente zum Festhalten der Warenbahn-Längsränder nur jeweils an den die Rollen aufweisenden Außenkettengliedern angebracht werden, wobei diese Halteelemente über diese Außenkettenglieder hinaus verlängert sind, um den Bereich der Zwischenglieder zu überbrücken. Diese Ausbildung hat u. a. zur Folge, daß eine zu behandelnde Warenbahn nicht immer in der gewünschten Gleichförmigkeit quergespannt werden kann, was sich vor allem auch im Bereich der Kettenumlenkorgane bzw. Kettenumlenkräder als nachteilig auswirkt, wodurch diese bekannte Ausführung auch bei einer Behandlung von Warenbahnen in mehreren übereinanderliegenden Behandlungsebenen, d. h. bei mehreren Warenbahn-Durchläufen durch die Spannmaschine ungeeignet ist.

Der Erfindung liegt daher die Aufgabe zugrunde, eine Spannkettenanordnung der im Oberbegriff des Anspruches 1 vorausgesetzten Art zu schaffen, die bei besonders gleichförmiger Führung der Warenbahn sowie bei optimalen Laufeigenschaften und besonders wartungsarmer und wartungsfreundlicher Konstruktion der Spannketten eine ausreichend große Knickbeweglichkeit der Spannketten quer zu ihrer allgemeinen Längsrichtung (Kettenumlaufrichtung) gestattet, wobei eine Behandlung der Warenbahnen sowohl in nur einer Behandlungsebene als auch in mehreren übereinanderliegenden Behandlungsebenen und sowohl bei relativ schweren Warenbahnen als auch bei relativ leichten Warenbahnen (z.B. Wirkwaren) zuverlässig ermöglicht werden soll.

Diese Aufgabe wird erfindungsgemäß durch die Kombination der im Kennzeichen des Anspruches 1 angegebenen Merkmale gelöst.

Vorteilhafte Ausgestaltungen und Weiterbildungen der Erfindung sind Gegenstand der Unteransprüche.

Diese erfindungsgemäße Spannkettenanordnung zeichnet sich in allererster Linie durch eine besonders vorteilhafte Ausbildung der Spannketten aus, die relativ große Schußkrumpfungen der zu behandelnden Warenbahn in deren Querrichtung (Breitenrichtung) durch eine verhältnismäßig große Knickbeweglichkeit quer zu ihrer allgemeinen Längsrichtung (Umlaufrichtung) gestattet. Zu diesem Zweck ist über die Länge jeder Spannkette zwischen je zwei einander benachbarten starren ersten Kettengliedern jeweils ein mehrfach gelenkiges zweites Kettenglied angeordnet, das im Bereich zwischen den beiden Kettengelenken zwei Zusatzgelenke mit zwei rechtwinklig zu den ersten Gelenkachsen dieser Kettengelenke verlaufenden zweiten Gelenkachsen aufweist. Damit wechseln sich über die Länge jeder Spannkette jeweils starre erste Kettenglieder mit mehrfach gelenkigen zweiten Kettengliedern kontinuierlich einander ab, wobei jeweils die zueinander weisenden Enden eines starren ersten Kettengliedes und eines benachbarten zweiten Kettengliedes durch die Kettengelenke für eine erforderliche Schwenkbeweglichkeit entsprechend dem Kettenumlauf miteinander verbunden sind, während zwischen diesen beiden Kettengelenken jedes zweiten Kettengliedes zwei mit Abstand voneinander angeordnete Zusatzgelenke ausgebildet sind. Somit ist die Länge dieser zweiten Kettenglieder insgesamt genauso groß wie die Länge der starren ersten Kettenglieder, so daß jede aus diesen ersten und zweiten Kettengliedern zusammengebaute Spannkette die erforderliche gleichbleibende Kettenteilung aufweist.

Bei diesen so aufgebauten Spannketten ist es nun ferner besonders sinnvoll, wenn jedes zweite Kettenglied an seinen beiden Endabschnitten je ein mit dem benachbarten ersten Kettenglied verbundenes äußeres Gelenkstück sowie ein zwischen diesen beiden Gelenkstücken angeordnetes und damit an den zweiten Gelenkachsen verbundenes Mittelstück aufweist. Aufgrund dieser Gestaltung der Spannketten wird es in äußerst vorteilhafter Weise ermöglicht, daß sowohl alle ersten Kettenglieder als auch alle zweiten Kettenglieder je ein seitlich auskragendes Halteelement (Nadelleisten oder Spannkluppen) aufweist, wobei die Halteelemente der zweiten Kettenglieder jeweils nur an deren Mittelstück angebracht sind. Hierdurch können die Warenbahn-Längsränder besonders gleichmäßig von den Halteelementen erfaßt werden. Die Halteelemente aller Kettenglieder können sich jeweils etwa über den Längenabstand zwischen je zwei Kettengelenken, vorzugsweise etwas weniger, und somit annähernd über die Abmessung der Kettenteilung erstrecken, wodurch diese Halteelemente über die ganze Länge jeder Spannkette in Anpassung an die Kettenteilung gleichmäßig verteilt sind.

Stellt man sich hier eine im wesentlichen vertikal umlaufende Spannkette vor, dann führt diese Gestaltung der Spannkette dazu, daß die Kettenglieder zusammen mit den an ihnen befestigten Halteelementen im Bereich jeder Umlenkstelle bzw. jedes Kettenumlenkorganes ein kontinuierliches, gleichförmiges Polygon bzw. einen Teil eines Polygons bilden, was eine besonders gleichförmige Führung und Halterung der Warenbahnen, insbesondere ihrer Längsränder, über den gesamten Transportweg, einschließlich eventueller Umlenkungen von einer Behandlungsebene in eine darunter- oder darüberliegende Behandlungsebene mit sich bringt.

Die besonders guten Laufeigenschaften sowie die besonders wartungsarme und wartungsfreundliche Konstruktion der Spannketten dieser erfindungsgemäßen Spannkettenanordnung kann in vorteilhafter Weise noch durch zweckmäßige Ausbildungen der Kettengelenke und Zusatzgelenke sowie durch entsprechende Gleitelemente an allen Kettengliedern in Kombination mit entsprechenden Gleitschienenführungen in den Kettenführungsschienen unterstützt werden, wie es in den Unteransprüchen angegeben ist und anhand der Zeichnung noch näher erläutert wird.

Nachfolgend sei die Erfindung anhand der Zeichnung näher beschrieben. In dieser Zeichnung zeigen
- Fig.1: eine teilweise Seitenansicht der erfindungsgemäßen Spannkettenanordnung bei vertikal umlaufender Spannkette;
- Fig.2: eine Teil-Aufsicht auf die Spannkettenanordnung im Bereich einer Spannkette (etwa entsprechend der Linie II-II in Fig.1);
- Fig.3: eine Querschnittsansicht durch ein Kettengelenk, etwa entlang der Linie III-III in Fig.2;
- Fig.4: eine Querschnittsansicht durch ein Zusatzgelenk, etwa entlang der Linie IV-IV in Fig.2;
- Fig.5: eine ähnliche Teil-Aufsicht auf einen Spannkettenabschnitt zur Erläuterung einer vorteilhaften Ausführungsvariante im Bereich der mehrfach gelenkigen zweiten Kettenglieder;
- Fig.6 und 7: eine Ansicht und eine Aufsicht eines Rückstell-Federelements in Form einer dünnen Blattfeder.

Die in der Zeichnung veranschaulichte erfindungsgemäße Spannkettenanordnung kann in eine ansonsten in bekannter Weise ausgeführte Spannmaschine eingebaut sein bzw. werden, die zur Wärmebehandlung breitgeführter Warenbahnen in einer Behandlungsebene (einmaliger Durchlauf einer Warenbahn) oder in mehreren übereinanderliegenden Behandlungsebenen (mehrmaliger Warenbahn-Durchlauf) vorgesehen ist, wobei in diesem Beispiel angenommen sei, daß die Spannketten als im wesentlichen vertikal umlaufend ausgeführt sind und - wie anhand der Zeichnung noch erläutert wird - von Kettenumlenkrädern mit etwa horizontalen Drehachsen umgelenkt bzw. angetrieben werden.

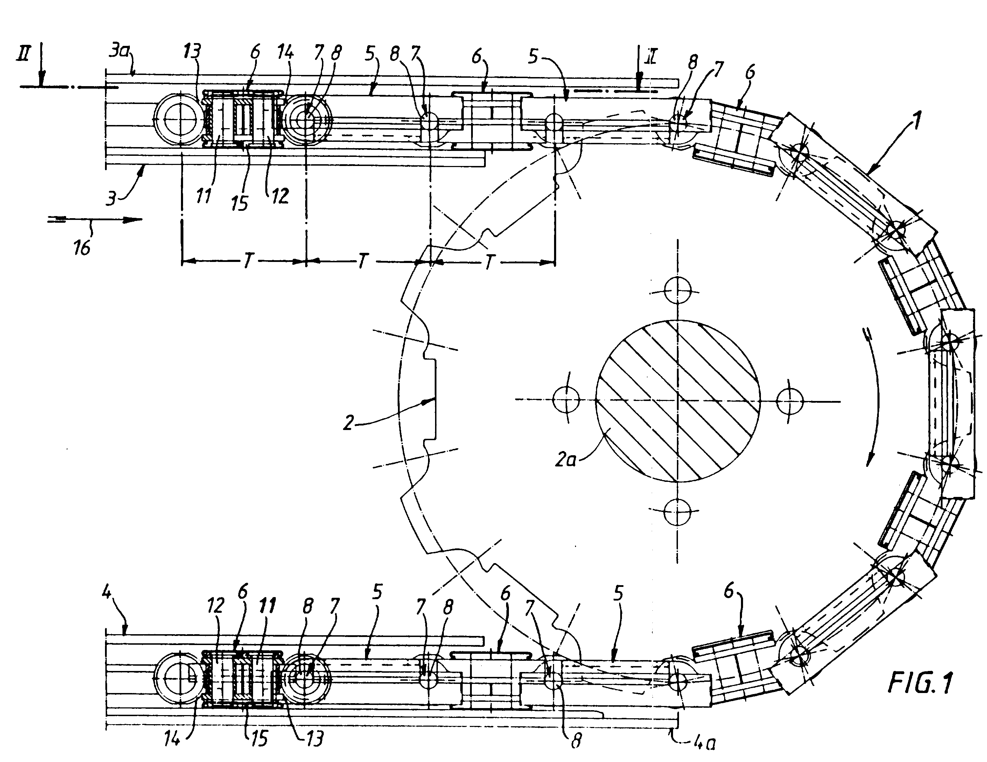

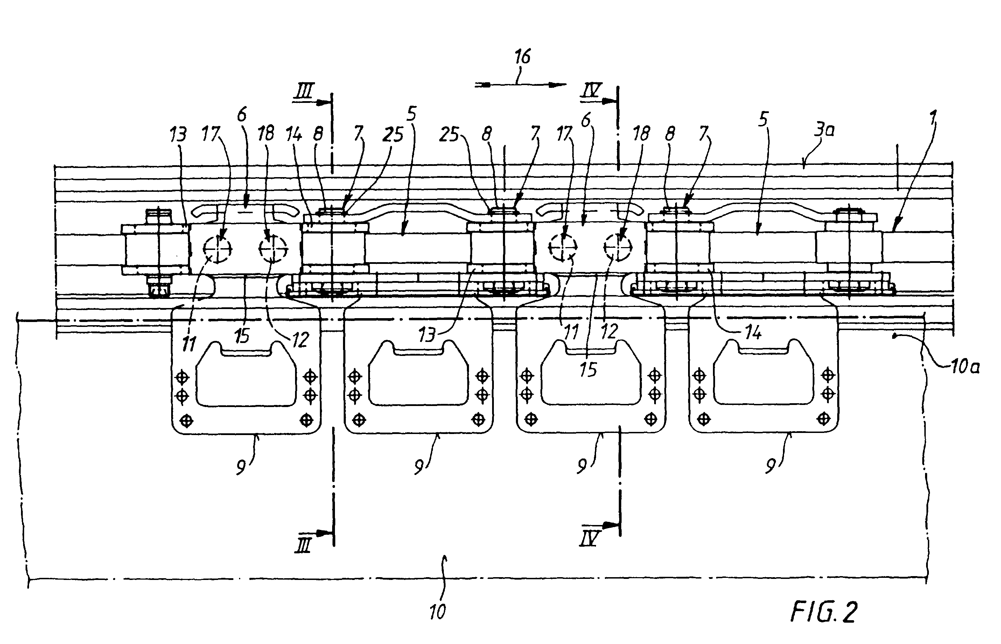

In den Fig.1 und 2 ist nur eine Teil-Ansicht bzw. Teil-Aufsicht dieser erfindungsgemäßen Spannkettenanordnung zu sehen, und zwar jeweils im Teilbereich einer Spannkette; die gesamte Spannkettenanordnung enthält dabei in an sich bekannter Weise zwei mit Abstand nebeneinander und bei spiegelbildlicher Zusammenordnung endlos umlaufende, ansonsten aber gleichartig konstruierte Spannketten. In diese Fig.1 und 2 ist von der Spannkettenanordnung dementsprechend nur eine einzige Spannkette 1 nur in einem Teil ihrer Gesamtlänge mit einem als Kettenumlenkrad 2 ausgebildeten Kettenumlenkorgan sowie mit Teilabschnitten 3a, 4a von zugehörigen Kettenführungsschienen 3, 4 veranschaulicht. Die zu dieser Spannkette 1 und den zugehörigen Teilen nachfolgend beschriebenen Einzelheiten gelten in entsprechender Weise auch für die nicht näher veranschaulichte zweite Spannkette mit ihren Zubehörteilen.

Jede Spannkette 1 enthält eine Vielzahl von ersten Kettengliedern 5 und zweiten Kettengliedern 6, wobei sich diese verschiedenen Kettengliedtypen 5, 6 entlang der gesamten Spannkette 1 kontinuierlich einander abwechseln. Diese Kettenglieder 5, 6 sind in an sich bekannter Weise unter Einhaltung einer gleichbleibenden Kettenteilung T (Fig.1) durch an ihren Enden ausgebildete Kettengelenke 7 in der Weise miteinander verbunden, daß die Kettenglieder 5, 6 um etwa horizontale, quer zur Spannkette 1 verlaufende erste Gelenkachsen, die durch etwa horizontale erste Gelenkbolzen 8 gebildet werden, in etwa vertikaler Richtung (für einen vertikalen Kettenumlauf) schwenkbeweglich sind. Vernachlässigt man einmal die Tatsache, daß die beiden mit Abstand nebeneinander endlos umlaufenden Spannketten 1 dieser Spannkettenanordnung entsprechend den jeweiligen Erfordernissen der Breitenführung entlang des Warenbahn-Transportweges mal etwas divergierend und mal etwas konvergierend verlaufen können, dann ergibt sich aufgrund der zuvor erläuterten Ausbildung und Anordnung eine in einer im wesentlichen vertikalen Ebene endlos umlaufende Spannkette 1, die an den entsprechenden Umlenkstellen um Kettenumlenkräder 2 in der erforderlichen Weise umgelenkt werden können, die um jeweils horizontale Drehachsen 2a drehbar sind, von denen eine als Antriebsachse dienen kann.

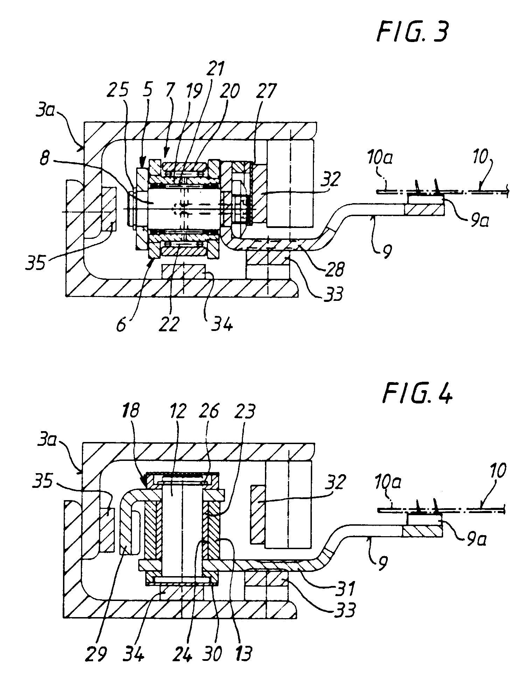

Wie später noch etwas näher erläutert werden wird, ist an jedem Kettenglied 5, 6 ein seitlich auskragendes Halteelement 9 fest angebracht. Diese Halteelemente 9 können in an sich bekannter Weise mit Nadelleisten 9a (Fig.3 und 4) oder Kluppen ausgestattet sein, um den zugehörigen Längsrand 10a einer nur strichpunktiert angedeuteten zu behandelnden Warenbahn 10 festzuhalten.

Wie bereits weiter oben angedeutet wurde, ist die erfindungsgemäße Spannkette 1 aus zwei einander abwechselnden Typen von ersten und zweiten Kettengliedern 5 und 6 zusammengebaut. Bei den ersten Kettengliedern 5 handelt es sich um starre Kettenglieder, die in an sich bekannter Weise in Form von Außenlaschen-Kettengliedern ausgeführt sind und vorzugsweise Kettenaußenglieder bilden. Als zweiter Kettengliedtyp sind mehrfach gelenkige zweite Kettenglieder 6 vorgesehen, die Ketteninnenglieder bilden. Dementsprechend ist - wie die Fig.1 und 2 zeigen - zwischen je zwei einander benachbarten starren ersten Kettengliedern 5 jeweils ein mehrfach gelenkiges zweites Kettenglied 6 angeordnet, das im Bereich zwischen seinen beiden Kettengelenken 7 um zwei rechtwinklig zu den ersten Gelenkbolzen 8 verlaufende, d.h. im wesentlichen vertikale zweite Gelenkachsen in sich gelenkig ist, die durch vertikal verlaufende zweite Gelenkbolzen 11, 12 gebildet werden. Jedes zweite Kettenglied 6 ist somit in sich um die beiden vertikalen Gelenkbolzen 11, 12 zusätzlich in horizontaler Richtung gelenkig bzw. abknickbar, und zwar bei ansonsten vertikaler Schwenkbeweglichkeit um die Kettengelenke 7 an seinen beiden Enden.

Bei dieser Spannkettenausbildung ist somit jedes zweite Kettenglied 6 gewissermaßen dreiteilig aufgebaut, indem es an seinen beiden Endabschnitten je ein mit dem benachbarten starren ersten Kettenglied 5 - über das zugehörige Kettengelenk 7 - verbundenes äußeres Gelenkstück 13, 14 sowie ein Mittelstück 15 aufweist, das zwischen den beiden Gelenkstücken 13, 14 angeordnet und damit an den vertikalen Gelenkbolzen 11, 12 für eine horizontale Gelenkigkeit verbunden ist.

Bei jedem dreiteiligen zweiten Kettenglied bzw. Ketteninnenglied 5 können die beiden äußeren Gelenkstücke 13, 14 als Guß-Drehgelenke recht einfach hergestellt und das Mittelstück 15 im wesentlichen durch entsprechend kurze Laschen gebildet sein, die die beiden Gelenkstücke 13, 14 mit Hilfe der beiden Gelenkbolzen 11, 12 äußerst einfach gelenkig miteinander verbinden.

Wie bereits erwähnt worden ist, weisen sowohl alle ersten Kettenglieder 5 als auch alle zweiten Kettenglieder 6 je ein seitlich auskragendes Halteelement 9, 9a auf, und hierbei sind die Halteelemente 9 der zweiten Kettenglieder 6 jeweils nur an deren Mittelstücken 15 angebracht.

Gemäß den Fig.1 und 2 erstrecken sich die Halteelemente 9 mitsamt den darauf angebrachten Nadelleisten oder Kluppen bei gleichmäßiger Verteilung über die ganze Kettenlänge etwa zwischen den horizontalen ersten Gelenkbolzen 8, die mit den Kettengelenken 7 die Kettenteilung T der Spannkette 1 bestimmen. Die Halteelemente 9 der ersten Kettenglieder 5 und der zweiten Kettenglieder 6 können dabei in vorteilhafter Weise gleichlang ausgeführt und etwa symmetrisch zum zugehörigen Kettenglied angeordnet sein. Bei dieser Ausbildung und Anordnung der Spannkette 1 ergibt sich im Bereich einer Kettenumlenkstelle, d. h. an einem Kettenumlenkrad 2 durch die aufeinanderfolgenden Halteelemente 9 jeweils ein Teilumfangsabschnitt eines kontinuierlichen, gleichseitigen Polygons, was für die zuverlässige Führung einer zu behandelnden Warenbahn erforderlich ist. Darüber hinaus gestattet diese Ausbildung eine problemlose Umlenkung von einer ersten Warenbahn-Behandlungsebene in eine zweite Behandlungsebene.

Im Hinblick auf die konstruktive Gestaltung der verschiedenen Gelenke in bzw. zwischen den Kettengliedern 5, 6 sei zunächst folgendes vorausgeschickt. Wie bereits weiter oben angedeutet wurde, sind die verschiedenen Kettenglieder 5, 6 durch die Kettengelenke 7 für den allgemeinen Kettenumlauf in der vertikalen Umlaufebene entsprechend der Kettenteilung T miteinander verbunden. Da hier eine relativ große Schwenkbeweglichkeit in vertikaler Richtung zwischen den einzelnen Kettengliedern 5, 6 erforderlich ist, müssen in diesen Kettengelenken 7 entsprechend angepaßte Lager vorgesehen sein. Dagegen ist im Betrieb der Spannmaschine und somit der Spannketten 1 nur eine vergleichsweise geringe Schwenkgelenkigkeit innerhalb der mehrfach gelenkigen zweiten Kettenglieder 6 in etwa horizontaler Richtung (quer zur Kettenlaufrichtung) erforderlich, weshalb die im Bereich der vertikalen zweiten Gelenkbolzen 11, 12 ausgebildeten Zusatzgelenke 17, 18 nur für eine äußerst kleine Drehbewegung (entsprechend der Verstellung der Kettenführungsschienen 3, 4 um wenige Grad) erforderlich ist.

In Anbetracht der zuvor erläuterten Erfordernisse enthalten somit bei jeder Spannkette 1 die Kettengelenke 7, die die einander benachbarten Enden der entsprechenden ersten und zweiten Kettenglieder 5, 6 miteinander verbinden, jeweils eine Gelenkbuchse 19, den innerhalb dieser Gelenkbuchse 19 angeordneten, horizontalen ersten Gelenkbolzen 8 sowie zumindest ein Nadellager. Vorzugsweise ist jedoch in jedem Kettengelenk 7 sowohl zwischen dem ersten Gelenkbolzen 8 und der Gelenkbuchse 19 als auch zwischen dieser Gelenkbuchse 19 und einem drehbaren Außenring (Rolle) 20 wenigstens je ein Nadellager 21 bzw. 22 angeordnet. Diese Ausbildung der Kettengelenke 7 ist in Fig.3 näher veranschaulicht.

Bei jedem zweiten Kettenglied 6 dieser erfindungsgemäßen Spannkette 1 wird es dagegen für besonders vorteilhaft angesehen, jedes Ende des Mittelstückes 15 (vgl. Fig.1 und 2) durch eines der bereits erwähnten Zusatzgelenke 17, 18 mit einem der beiden äußeren Gelenkstücke, d. h. mit dem jeweils zugehörigen Gelenkstück 13 bzw. 14 zu verbinden. Jedes Zusatzgelenk 17, 18 enthält hierbei - wie Fig.4 näher veranschaulicht - je einen die zweite Gelenkachse bildenden vertikalen zweiten Gelenkbolzen 11, 12 und ein mit Dauerschmierstoff gefülltes Gleitlager, das im wesentlichen durch eine Gleitlagerbuchse 23 gebildet ist, die zwischen dem zugehörigen Gelenkbolzen 11 bzw. 12 und einer Lagerbohrung 24 des zugehörigen Gelenkstückes 13 bzw. 14 angeordnet ist. Zweckmäßig können die Gleitlager bzw. Gleitlagerbuchsen 23 in den Zusatzgelenken 17, 18 durch mit entsprechendem Dauerschmierstoff (an sich bekannt) versehene Bronzegleitlager oder auch durch entsprechende Gleitlager aus hochtemperaturfestem Kunststoff (beispielsweise Polyimid) gebildet sein.

Die vorhergehend beschriebenen Ausbildungen der Kettengelenke 7 und Zusatzgelenke 17, 18 mit den entsprechenden Nadellagerungen und Gleitlagerungen stellen besonders bevorzugte Ausführungen im Sinne optimaler Laufeigenschaften dar und begünstigen darüber hinaus eine besonders wartungsarme Konstruktion der Spannketten 1.

In allen zuvor erläuterten Gelenken bzw. Lagerstellen wird besonderer Wert auf lange wirksame Dauerschmierstoffe gelegt. Dies bringt in mehrfacher Hinsicht besondere Vorteile gegenüber ölgeschmierten Spannketten mit sich, durch die die Abluft einer Spannmaschine zusätzlich verunreinigt wird (Schmieröl verdampft bei den hohen Betriebstemperaturen in der Spannmaschine), was nicht nur zu einer Verschmutzung einer Warenbahn während ihrer Behandlung führen kann, sondern auch die Abluftqualität verschlechtert und somit die Umwelt belastet bzw. zusätzliche Abluft-Reinigungseinrichtungen erforderlich macht. Bei einer langzeitgeschmierten Spannkette werden weder die zu behandelnden Warenbahnen, noch die Abluft geschädigt. Darüber hinaus ist eine solche langzeitgeschmierte Spannkette auch aus betriebstechnischen bzw. betriebswirtschaftlichen Gründen besonders vorteilhaft.

Um bei diesen Spannketten 1 auch die Wartungsfreundlichkeit noch besonders zu fördern, ist es ferner zweckmäßig, wenn sowohl die horizontalen ersten Gelenkbolzen 8 der Kettengelenke 7 als auch die zweiten Gelenkbolzen 11, 12 in den Zusatzgelenken 17, 18 der zweiten Kettenglieder 6 durch rasch und einfach anbringbare und lösbare Schnellverschlußelemente 25 bzw. 26 am zugehörigen Gelenk festgelegt sind, wobei diese Schnellverschlußelemente 25, 26 vorzugsweise in Form von aus Federstahl hergestellten Seegerringen ausgeführt sind.

Die gewünschten guten Laufeigenschaften der Spannketten 1 können darüber hinaus noch weiter optimiert werden, wenn sowohl die ersten Kettenglieder 5 als auch die zweiten Kettenglieder 6 Gleitelemente, vorzugsweise jeweils mehrere verteilt angeordnete Gleitelemente (etwa in Form von Gleitfedern) 27, 28 an den starren ersten Kettengliedern 5 (Fig.3) bzw. 29, 30, 31 an den zweiten Kettengliedern 6 (Fig.4) besitzen, über die jede Spannkette 1 in wenigstens einer zumindest die Querspannungen der Warenbahn 10 aufnehmenden, im wesentlichen schmiermittelfreien Gleitschienenführung, vorzugsweise in mehreren solchen Gleitschienenführungen 32, 33, 34 und 35 der Kettenführungsschienen 3, 4 abgestützt ist. Gemäß den Darstellungen in den Fig.3 und 4 sind diese Gleitschienenführungen 32 bis 35 in zweckmäßiger Weise über den Querschnitt des zugehörigen Teilabschnittes 3a bzw. 4a der Kettenführungsschiene 3, 4 verteilt. Jede dieser Gleitschienenführungen 32 bis 35 kann dabei in Form einer auf der zugehörigen Kettenführungsschiene 3, 4 befestigten Kohleschiene oder Kunststoffschiene ausgeführt sein, wobei die zuletzt erwähnte Ausführung aus besonders hochtemperaturfestem Kunststoff (z. B. Polyimid) hergestellt ist.

Bei den bisherigen Erläuterungen der erfindungsgemäßen Spannkettenanordnung wird davon ausgegangen, daß der Längszug jeder Spannkette (Pfeilrichtung 16) im Zusammenhang mit dem Warenbahnzug (quer zur Warenbahn) an den seitlich auskragenden Halteelementen 9 jeweils groß genug ist, um sowohl die starren ersten Kettenglieder 5 als besonders auch die mehrfach gelenkigen zweiten Kettenglieder 6 in Längsrichtung bzw. Kettenumlaufrichtung ausgerichtet werden, und zwar auch dann, wenn eine kurzzeitige Querauslenkung durch die Zusatzgelenke 17, 18 in den zweiten Kettengelenken 6 aufgetreten ist. Nun kann es jedoch mitunter vorkommen, daß der Warenbahnzug vor allem bei leichten Warenbahnen (insbesondere leichten Wirkwaren) verhältnismäßig gering ist und dadurch die gegeneinander ausgelenkten Teile von zweiten Kettengelenken 6 nicht in die Geradeausstellung zurückgezwungen werden, d.h. im Bereich der genannten zweiten Kettengelenke 6 könnte ein etwa Z-förmiger Knick entstehen, der aufgrund des geringen Warenbahnzuges nicht zurückgestellt werden könnte, was ein ungleichmäßiges und somit unerwünschtes Warenbahnkantenbild zur Folge haben könnte.

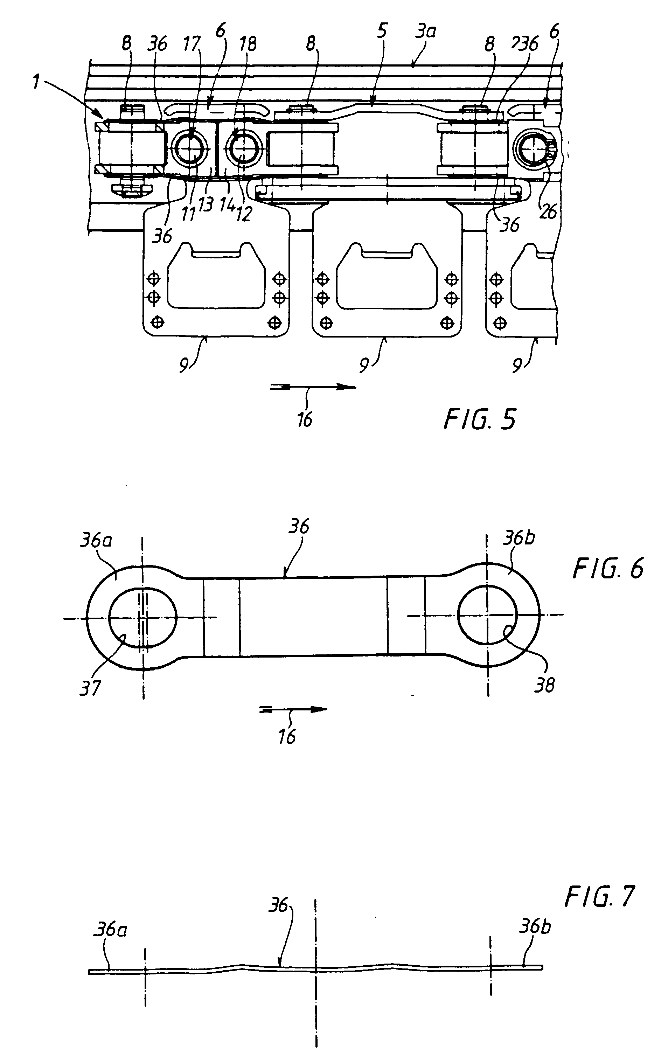

Um die zuvor geschilderten, etwa Z-förmigen Abknickungen der Spannkette im Bereich der mehrfach gelenkigen zweiten Kettenglieder 6 mit Sicherheit auch bei leichten Wirkwaren wieder aufheben zu können, wird gemäß der in Fig.5, 6 und 7 veranschaulichten Ausführungsvariante der zweiten Kettenglieder 6 vorgeschlagen, auf jeder äußeren Längsseite jedes zweiten Kettengliedes 6 ein die Zusatzgelenke 17, 18 überspannendes Rückstell-Federelement 36 zusätzlich anzuordnen. Jedes dieser Rückstell-Federelemente kann dabei auf äußerst einfache Weise (raum- und kostensparend) in Form einer relativ dünnen Blattfeder 36 ausgebildet sein, wie sie in den Fig.6 und 7 im einzelnen veranschaulicht ist. Dementsprechend sind die Enden 36a und 36b dieser Blattfeder 36 mit Aufnahmelöchern 37 bzw. 38 versehen und damit auf jeweils zwei in Kettenlängsrichtung einander benachbarten ersten Gelenkbolzen 8 aufgesteckt. Die Blattfedern 36 sind hierbei ferner im Bereich der zweiten Gelenkachsen 11, 12 der Zusatzgelenke 17, 18 leicht nach außen gewölbt bzw. gebogen oder gekröpft, wie es in Fig.7 besonders deutlich zu erkennen ist.

In der Teil-Aufsicht gemäß Fig.5 auf einen Spannkettenabschnitt sind beim links veranschaulichten zweiten Kettenglied 6 u.a. - im Vergleich zu den zweiten Kettengliedern 6 in den Fig.1, 2 und 4 - der obere Laschenteil (für das Mittelstück 15) und die Schnellverschlußelemente (Sicherungselemente) für die zweiten Gelenkbolzen 11 und 12 weggelassen worden, so daß man bei diesem linken zweiten Kettenglied 6 direkt auf die beiden äußeren Gelenkstücke 13 und 14 sowie die zweiten Gelenkbolzen 11, 12 schaut. Aus dieser Fig.5 ist - wiederum besonders deutlich am links dargestellten Kettenglied 6 - zu erkennen, daß an den beiden sich gegenüberliegenden Längsseiten jedes mehrfach gelenkigen zweiten Kettengliedes 6 zwei der genannten Blattfedern 36 mit geeigneter Federvorspannung derart anliegen, daß diese zweiten Kettengelenke 6 während des Spannkettenumlaufs in Richtung des Pfeiles 16 aufgrund ihrer Zusatzgelenke 17, 18 quer zu ihrer Laufrichtung-der Warenbahnführung entsprechend - auslenken bzw. abknicken können, danach jedoch wieder in ihre Geradeausstellung (Kettenumlaufrichtung) zuverlässig zurückgestellt werden. Auf diese Weise wird die Spannkette 1 in allen Betriebszuständen gewissermaßen in ihrer Ideallinie in Kettenumlaufrichtung gehalten. Diese zuverlässige Betriebsweise kann somit durch konstruktiv äußerst einfache Zusatzmaßnahmen, nämlich durch eine zusätzliche Anbringung der zuvor beschriebenen dünnen Blattfedern 36 erreicht werden.

Bei diesen Blattfedern 36 ist es ferner zweckmäßig, entsprechend der Darstellung in Fig.6 das eine Aufnahmeloch 37 an dem einen Federende 36a in Form eines sich in Kettenlängsrichtung (Pfeil 16) erstreckenden Langloches und das in das andere Federende 36b eingearbeitete Loch 38 als kreisförmige Bohrung ausführen. Diese Ausbildungen der Aufnahmelöcher 37, 38 hat den Vorteil, daß zum einen das Montieren der Blattfedern 36 auf den ersten Gelenkbolzen 8 erleichtert und zum andern den Querauslenkbewegungen der zweiten Kettengelenke 6 - trotz der Rückstell-Vorspannkraft der Federn - eine ausreichend große und durch das Langloch (Loch 37) begrenzte Auslenkbewegungsmöglichkeit gestattet wird.

Im Zusammenhang mit der Anbringung der Blattfedern 36 sei noch erwähnt, daß diese vor allem nur bei relativ leichten Warenbahnen (z.B. leichte Wirkwaren) als zusätzliche Sicherheitsmaßnahme für einen zuverlässigen Kettenbetrieb zweckmäßig ist, während bei schwereren Warenbahnen im allgemeinen darauf verzichtet werden kann. Eine nachträgliche Anbringung solcher Blattfedern bzw. Rückstellfedern an den zweiten Kettengliedern 6 der Spannkette kann auf äußerst einfache Weise und ohne irgendwelche zusätzliche Umbaumaßnahmen der Spannkette bzw. der Kettenglieder vorgenommen werden.

Während die erfindungsgemäße Spannkettenanordnung anhand der Zeichnung bei einer Ausführung mit im wesentlichen vertikal umlaufenden Spannketten erläutert worden ist, bei der sich die Quer- bzw. Knickbeweglichkeit durch die beiden Zusatzgelenke in den zweiten Kettengliedern besonders vorteilhaft auswirkt, ist es leicht vorstellbar, daß die erfindungsgemäße Spannkettenanordnung auch für in etwa horizontalen Ebenen endlos umlaufende Spannketten ausgeführt sein kann, zumal es allgemein bekannt ist, daß Spannmaschinen - je nach Anwendungsfall und Ausführung - entweder mit im wesentlichen vertikal umlaufenden oder mit im wesentlichen horizontal umlaufenden Spannketten ausgeführt werden können.

## Patentansprüche

1. Spannkettenanordnung für eine Spannmaschine zur Wärmebehandlung breitgeführter Warenbahnen in wenigstens einer Behandlungsebene, enthaltend
a) zwei mit Abstand nebeneinander endlos umlaufende, die Warenbahnen an ihren Längsrändern (10a) festhaltende Spannketten (1) mit jeweils einer Vielzahl von Kettengliedern (5, 6), die unter Einhaltung einer gleichbleibenden Kettenteilung (T) durch an ihren Enden ausgebildete Kettengelenke (7) miteinander verbunden sind, die quer zur Längsrichtung der Spannkette verlaufende Gelenkachsen (8) für eine Schwenkbeweglichkeit der Kettenglieder (5, 6) aufweisen,
b) an den Kettengliedern (5, 6) angebrachte, seitlich auskragende Halteelemente (9) zum Festhalten der Warenbahn-Längsränder (10a),
c) mehrere drehbare Kettenumlenkorgane (2),
d) im Bereich zwischen den Kettenumlenkorganen (2) angeordnete Kettenführungsschienen (3, 4) zur Abstützung und Längsführung jeder Spannkette (1),
gekennzeichnet durch die Kombination folgender Merkmale:
e) über die Länge jeder Spannkette (1) ist zwischen je zwei einander benachbarten starren ersten Kettengliedern (5) jeweils ein mehrfach gelenkiges zweites Kettenglied (6) angeordnet, das im Bereich zwischen den beiden Kettengelenken (7) zwei Zusatzgelenke (17, 18) mit zwei rechtwinklig zu den ersten Gelenkachsen (8) der Kettengelenke (7) verlaufenden zweiten Gelenkachsen (11, 12) aufweist;
f) jedes zweite Kettenglied (6) weist an seinen beiden Endabschnitten je ein mit dem benachbarten ersten Kettenglied (5) verbundenes äußeres Gelenkstück (13, 14) sowie ein zwischen diesen beiden Gelenkstücken angeordnetes und damit an den zweiten Gelenkachsen (11, 12) verbundenes Mittelstück (15) auf;
g) sowohl alle starren ersten Kettenglieder (5) als auch alle mehrfach gelenkigen zweiten Kettenglieder (6) weisen je ein seitlich auskragendes Halteelement (9) auf, wobei die Halteelemente der zweiten Kettenglieder (6) jeweils nur an deren Mittelstück (15) angebracht sind.

2. Spannkettenanordnung nach Anspruch 1, wobei jede Spannkette aus einander abwechselnden Ketteninnengliedern und Kettenaußengliedern zusammengebaut ist, dadurch gekennzeichnet, daß die starren ersten Kettenglieder (5) die Kettenaußenglieder bilden und in Form von Außenlaschen-Kettengliedern ausgeführt sind, während die zweiten Kettenglieder (6) die Ketteninnenglieder bilden.

3. Spannkettenanordnung nach Anspruch 1, gekennzeichnet durch die Kombination mit folgenden weiteren Merkmalen:
a) die die einander benachbarten Enden der entsprechenden ersten Kettenglieder (5) und zweiten Kettenglieder (6) miteinander verbindenden Kettengelenke (7) enthalten jeweils eine Gelenkbuchse (19), einen die erste Gelenkachse bildenden ersten Gelenkbolzen (8) sowie wenigstens ein Nadellager (21, 22);
b) bei jedem mehrfach gelenkigen zweiten Kettenglied (6) ist jedes Ende des Mittelstückes (15) durch ein Zusatzgelenk (17, 18) mit einem der beiden äußeren Gelenkstücke (13, 14) verbunden, wobei diese Zusatzgelenke je einen die zweite Gelenkachse bildenden zweiten Gelenkbolzen (11, 12) und ein mit Dauerschmierstoff gefülltes Gleitlager (23) enthalten.

4. Spannkettenanordnung nach Anspruch 3, dadurch gekennzeichnet, daß in jedem Kettengelenk (7) sowohl zwischen dem ersten Gelenkbolzen (8) und der Gelenkbuchse (19) als auch zwischen dieser Gelenkbuchse und einem drehbaren Außenring (20) wenigstens je ein Nadellager (21, 22) angeordnet ist.

5. Spannkettenanordnung nach Anspruch 3, dadurch gekennzeichnet, daß in den Zusatzgelenken (17, 18) der zweiten Kettenglieder (6) mit Dauerschmierstoff versehene Bronzegleitlager oder Gleitlager aus hochtemperaturfestem Kunststoff vorgesehen sind.

6. Spannkettenanordnung nach Anspruch 3, dadurch gekennzeichnet, daß sowohl die ersten Gelenkbolzen (8) an den Kettengelenken (7) als auch die zweiten Gelenkbolzen (11, 12) in den Zusatzgelenken (17, 18) der zweiten Kettenglieder (6) durch lösbare Schnellverschlußelemente (25, 26), vorzugsweise aus Federstahl hergestellte Seegerringe am zugehörigen Gelenk (7, 17, 18) festgelegt sind.

7. Spannkettenanordnung nach Anspruch 1, dadurch gekennzeichnet, daß sowohl die ersten Kettenglieder (5) als auch die zweiten Kettenglieder (6) Gleitelemente (27, 28 bzw. 29, 30, 31) besitzen, über die jede Spannkette (1) an wenigstens einer zumindest die Querspannungen der Warenbahn (10) aufnehmenden, im wesentlichen schmiermittelfreien Gleitschienenführung (32 bis 35) der Kettenführungsschienen (3, 4) abgestützt ist.

8. Spannkettenanordnung nach Anspruch 7, dadurch gekennzeichnet, daß jede Gleitschienenführung (32 bis 35) in Form einer auf der zugehörigen Kettenführungsschiene (3, 4) befestigten Kohleschiene oder Kunststoffschiene ausgebildet ist, wobei die Kunststoffschiene aus besonders hochtemperaturfestem Kunststoff hergestellt ist.

9. Spannkettenanordnung nach Anspruch 1, dadurch gekennzeichnet, daß auf jeder äußeren Längsseite jedes zweiten Kettengliedes (6) ein die beiden Zusatzgelenke (17, 18) überspannendes Rückstellfederelement (36) angeordnet ist.

10. Spannkettenanordnung nach Anspruch 9, dadurch gekennzeichnet, daß jedes Rückstell-Federelement in Form einer relativ dünnen Blattfeder (36) ausgebildet ist, deren Enden mittels Aufnahmelöcher (37, 38) auf jeweils zwei in Kettenlängsrichtung einander benachbarten ersten Gelenkbolzen (8) aufgesteckt und die im Bereich der zweiten Gelenkachsen (11, 12) der Zusatzgelenke (17, 18) leicht nach außen gewölbt sind.

11. Spannkettenanordnung nach Anspruch 10, dadurch gekennzeichnet, daß von den Aufnahmelöchern jeder Blattfeder (26) das eine Aufnahmeloch (38) als kreisförmige Bohrung und das andere Aufnahmeloch (37) als sich in Kettenlängsrichtung (16) erstreckendes Langloch ausgeführt ist.

12. Spannkettenanordnung nach Anspruch 1, dadurch gekennzeichnet, daß jede Spannkette als im wesentlichen vertikal umlaufende Spannkette (1) mit um horizontale Drehachsen (2a) drehbaren Kettenumlenkrädern (2) ausgeführt ist.

13. Spannkettenanordnung nach Anspruch 1, dadurch gekennzeichnet, daß jede Spannkette als im wesentlichen horizontal umlaufende Spannkette mit um vertikale Drehachsen drehbaren Kettenumlenkrädern ausgeführt ist.

## Claims

1. Tensioning chain arrangement for a stenter for the heat treatment of lengths of material guided in open width in at least one treatment plane, comprising
a) two tensioning chains (1), which run round continuously and are spaced from one another and which hold the lengths of material firmly on their long edges (10a), each having a plurality of chain links (5, 6) which are connected to one another, maintaining a constant chain pitch (T), by chain joints (7) which are constructed on their ends and have joint axes (8) extending transversely with respect to the longitudinal direction of the tensioning chain for pivotability of the chain links (5, 6),
b) retaining elements (9) which are firmly attached to the chain links (5, 6) and jut out laterally in order to hold the longitudinal edges (10a) of the length of material,
c) a plurality of rotatable chain return members (2),
d) chain guide rails (3, 4) disposed in the region between the chain return members (2) for support and longitudinal guiding of each tensioning chain (1),
characterised by the combination of the following features:
e) a multi-joint second chain link (6) is disposed over the length of each tensioning chain (1) between each pair of adjacent rigid first chain links (5), the said second chain link (6) having in the region between the two chain joints (7) two additional joints (17, 18) with two joint axes (11, 12) extending at right angles to the first joint axes (8) of the chain joints (7);
f) each second chain link (6) has on each of its two end portions an outer joint piece (13, 14) connected to the adjacent first chain link (5) as well as a middle piece (15) which is disposed between these two joint pieces and thus connected to the second joint axes (11, 12);
g) not only all rigid first chain links (5) but also all multi-joint second chain links (6) each have a laterally projecting retaining element (9), the retaining elements of the second chain links (6) being in each case mounted only on the middle piece (15) thereof.

2. Tensioning chain arrangement as claimed in Claim 1, wherein each tensioning chain is composed of alternating inner chain links and outer chain links, characterised in that the rigid first chain links (5) form the outer chain links and are constructed in the form of chain links with side plates, whilst the second chain links (6) form the inner chain links.

3. Tensioning chain arrangement as claimed in Claim 1, characterised by the combination with the following further features:
a) the chain joints (7), by which the ends which are adjacent to one another of the corresponding first chain links (5) and second chain links (6) are connected to one another, in each case comprise a bushing (19), a first pintle (8) forming the first joint axis as well as at least one needle bearing (21, 22);
b) in each multi-joint second chain link (6) each end of the middle piece (15) is connected by an additional joint (17, 18) to one of the two outer joint pieces (13, 14), these additional joints each comprising a second pintle (11, 12) forming the second joint axis and a plain bearing (23) filled with permanent lubricant.

4. Tensioning chain arrangement as claimed in Claim 3, characterised in that in each chain joint (7) at least one needle bearing (21, 22) is in each case disposed both between the first pintle (8) and the bushing (19) and also between this bushing and a rotatable outer ring (20).

5. Tensioning chain arrangement as claimed in Claim 3, characterised in that bronze plain bearings provided with permanent lubricant or plain bearings made from plastics material which is resistant to high temperatures are provided in the additional joints (17, 18).

6. Tensioning chain arrangement as claimed in Claim 3, characterised in that not only the first pintles (8) on the chain joints (7) but also the second pintles (11, 12) in the additional joints (17, 18) of the second chain links (6) are fixed on the appertaining joint (7, 17, 18) by releasable snap closure elements (25, 26), preferably circlips produced from spring steel.

7. Tensioning chain arrangement as claimed in Claim 1, characterised in that not only the first chain links (5) but also the second chain links (6) have slide elements (27, 28 or, respectively, 29, 30, 31) by means of which each tensioning chain (1) is supported on at least one slide rail guide (32 to 35) of the chain guide rails (3, 4) which at least takes up the cross-tensions of the length of material (10) and is substantially free of lubricant.

8. Tensioning chain arrangement as claimed in Claim 7, characterised in that each slide rail guide (32 to 35) is constructed in the form of a carbon rail or plastic rail fixed on the appertaining chain guide rail (3, 4), the plastic rail being produced from plastics material which is particularly resistant to high temperatures.

9. Tensioning chain arrangement as claimed in Claim 1, characterised in that a restoring spring element (36) which spans the two additional joints (17, 18) is disposed on each outer long side of each second chain link (6).

10. Tensioning chain arrangement as claimed in Claim 9, characterised in that each restoring spring element is constructed in the form of a relatively thin leaf spring (36), the ends of which in each case are pushed by means of receiving holes (37, 38) onto two first pintles (8) which are adjacent to one another in the longitudinal direction of the chain and which are bowed slightly outwards in the region of the second joint axes (11, 12) of the additional joints (17, 18).

11. Tensioning chain arrangement as claimed in Claim 10, characterised in that of the receiving holes of each leaf spring (26) one receiving hole (38) is constructed as a circular bore and the other receiving hole (37) as a slot extending in the longitudinal direction of the chain (16).

12. Tensioning chain arrangement as claimed in Claim 1, characterised in that each tensioning chain is constructed as a tensioning chain (1) which runs round substantially vertically with chain return wheels (2) which are rotatable about horizontal axes of rotation (2a).

13. Tensioning chain as claimed in Claim 1, characterised in that each tensioning chain is constructed as a tensioning chain which runs round substantially horizontally with chain return wheels which are rotatable about vertical axes of rotation .

## Revendications

1. Système de chaînes de tension destiné à une rameuse pour le traitement thermique de nappes continues de tissu guidées en largeur dans au moins un plan de traitement, comprenant :
a) deux chaînes de tension (1) circulant sans fin en étant juxtaposées à distance, tenant les nappes continues de tissu sur leurs bords longitudinaux (10a) et dont chacune comprend de multiples chaînons (5, 6) qui sont reliés avec maintien d'un pas constant (T) de la chaîne par des articulations (7) de chaîne réalisées à leurs extrémités et comprenant des axes d'articulation (8) perpendiculaires à la direction de la longueur de la chaîne de tension et destinés à assurer la mobilité à pivotement des chaînons (5, 6),
b) des éléments de retenue (9) placés sur les chaînons (5, 6), en saillie latéralement et destinés à tenir les bords longitudinaux (10a) de la nappe continue de tissu ;
c) plusieurs organes rotatifs (2) de renvoi de la chaîne,
d) des barres (3, 4) de guidage de la chaîne disposées entre les organes (2) de renvoi de la chaîne et destinées à soutenir et à guider longitudinalement chaque chaîne de tension (1),
caractérisé par la combinaison des particularités suivantes :
e) un deuxième chaînon (6) à plusieurs articulations, qui est disposé sur la longueur de chaque chaîne de tension (1) entre deux premiers chaînons rigides voisins (5), comprend entre les deux articulations (7) de chaîne deux articulations supplémentaires (17, 18) comprenant deux deuxièmes axes d'articulation (11, 12) qui sont perpendiculaires aux premiers axes (8) des articulations (7) de la chaîne ;
f) chaque deuxième chaînon (6) comprend à chacune des deux parties d'extrémité une pièce extérieure d'articulation (13, 14) reliée au premier chaînon voisin (5) ainsi qu'une pièce centrale (15) disposée entre ces deux pièces d'articulation et donc reliée aux deuxièmes axes d'articulation (11,12 ) ;
g) aussi bien tous les premiers chaînons rigides (5) que tous les deuxièmes chaînons (6) à plusieurs articulations comportent un élément de retenue (9) en saillie latéralement, les éléments de retenue des deuxièmes chaînons (6) n'étant disposés que sur la pièce centrale (15) de ceux-ci.

2. Système de chaînes de tension selon la revendication 1, dans lequel chaque chaîne de tension est formée d'un assemblage de chaînons intérieurs et de chaînons extérieurs qui alternent, caractérisé en ce que les premiers chaînons rigides (5) forment les chaînons extérieurs et sont réalisés en forme de chaînons formant des maillons extérieurs, tandis que les deuxièmes chaînons (6) forment les maillons intérieurs.

3. Système de chaînes de tension selon la revendication 1, caractérisé par la combinaison avec les autres particularités suivantes :
a) chacune des articulations (7) de la chaîne qui relient les extrémités voisines des premiers chaînons (5) et des deuxièmes chaînons (6) correspondants comprend une douille d'articulation (19), un premier tourillon (8) formant le premier axe d'articulation de la chaîne ainsi qu'un roulement à aiguilles (21, 22) ;
b) chaque extrémité de la pièce centrale (15) des deuxièmes chaînons (6) à plusieurs articulations est reliée à l'une des deux pièces extérieures d'articulation (13, 14) par une articulation supplémentaire (17, 18), chacune de ces articulations supplémentaires comprenant un deuxième tourillon (11, 12) formant le deuxième axe d'articulation, ainsi qu'un coussinet (23) rempli d'un lubrifiant permanent.

4. Système de chaînes de tension selon la revendication 3, caractérisé en ce qu'au moins un roulement à aiguilles (21, 22) est disposé dans chaque articulation (7) de la chaîne aussi bien entre le premier tourillon (8) et la douille d'articulation (19) qu'entre cette douille d'articulation et une bague extérieure rotative (20).

5. Système de chaînes de tension selon la revendication 3, caractérisé en ce que des coussinets de bronze ou des coussinets de matière plastique résistant aux températures élevées, qui sont remplis de lubrifiant permanent, sont prévus dans les articulations supplémentaires (17, 18) des deuxièmes chaînons (6).

6. Système de chaînes de tension selon la revendication 3, caractérisé en ce qu'aussi bien les premiers tourillons (8) des articulations (7) de la chaîne que les deuxièmes tourillons (11, 12) des articulations supplémentaires (17, 18) des deuxièmes chaînons (6) sont fixés à l'articulation correspondante (7, 17, 18) par des éléments amovibles de blocage rapide (25, 26), de préférence par des anneaux de retenue en acier à ressort.

7. Système de chaînes de tension selon la revendication 1, caractérisé en ce qu'aussi bien les premiers chaînons (5) que les deuxièmes chaînons (6) comprennent des éléments de glissement (27, 28 ainsi que 29, 30, 31) par lesquels chaque chaîne de tension (1) prend appui contre au moins un guide à barre de glissement (32 à 35) des barres de guidage de chaîne (3, 4) qui est sensiblement exempt de lubrifiant et qui absorbe au moins les tensions transversales de la nappe continue de tissu (10).

8. Système de chaînes de tension selon la revendication 7, caractérisé en ce que chaque guide à barre de glissement (32 à 35) est réalisé à la forme d'une barre de carbone ou d'une barre de matière plastique fixée à la barre correspondante (3, 4) de guidage de chaîne, la barre en matière plastique étant réalisée en matière résistant aux températures particulièrement élevées.

9. Système de chaînes de tension selon la revendication 1, caractérisé en ce qu'un élément élastique de rappel (36) qui chevauche les deux articulations supplémentaires (17, 18) est disposé sur chaque côté long extérieur de chaque deuxième chaînon (6).

10. Système de chaînes de tension selon la revendication 9, caractérisé en ce que chaque élément élastique de rappel est réalisé à la forme d'une lame de ressort relativement mince (36), dont les extrémités sont enfilées par des trous de logement (37, 38) sur deux premiers tourillons (8) voisins dans la direction de la longueur de la chaîne et qui est légèrement bombées vers l'extérieur dans la région des deuxièmes axes (11, 12) des articulations supplémentaires (17, 18).

11. Système de chaînes de tension selon la revendication 10, caractérisé en ce que l'un (38) des trous de logement de chaque lame de ressort (26) est conformé en trou circulaire et l'autre trou de logement (37) est conformé en boutonnière orientée dans la direction de la longueur de la chaîne (16).

12. Système de chaînes de tension selon la revendication 1, caractérisé en ce que chaque chaîne de tension est réalisée sous la forme d'une chaîne de tension (1) circulant sans fin sensiblement verticalement et passant sur des pignons rotatifs à chaîne de renvoi (2) à axe horizontal (2a) de rotation.

13. Système de chaînes de tension selon la revendication 1, caractérisé en ce que chaque chaîne de tension est réalisée sous la forme d'une chaîne de tension circulant sans fin sensiblement horizontalement et passant sur des pignons rotatifs à chaîne de renvoi à axe vertical de rotation.
